(19) Europäisches Patentamt
European Patent Office
Office européen des brevets

(11) Publication number: **0 264 736 B1**

(12) **EUROPEAN PATENT SPECIFICATION**

(45) Date of publication of patent specification: **13.05.92**

(51) Int. Cl.5: **A01N 47/30**, //(A01N47/30, 37:32)

(21) Application number: **87114754.2**

(22) Date of filing: **09.10.87**

(54) **Herbicidal composition.**

(30) Priority: **09.10.86 JP 240738/86**

(43) Date of publication of application:
**27.04.88 Bulletin 88/17**

(45) Publication of the grant of the patent:
**13.05.92 Bulletin 92/20**

(84) Designated Contracting States:
**AT BE CH DE ES FR GB GR IT LI NL SE**

(56) References cited:
**EP-A- 0 061 741**
**EP-A- 0 164 422**
**GB-A- 2 046 754**
**US-A- 4 032 326**

(73) Proprietor: **SUMITOMO CHEMICAL COMPANY, LIMITED**
**Kitahama 4-chome 5-33**
**Chuo-ku Osaka 541(JP)**

(72) Inventor: **Hamada, Tatsuhiro**
**3-4-8-306, Mukomoto-machi**
**Amagasaki-shi Hyogo-ken(JP)**
Inventor: **Yoshida, Ryo**
**5-19, Azajizoyama Higashiuneno**
**Kawanishi-shi Hyogo-ken(JP)**

(74) Representative: **Vossius & Partner**
**Siebertstrasse 4 P.O. Box 86 07 67**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.08/2.19/2.0)

## Description

The present invention relates to a herbicidal composition. More particularly, it relates to a novel herbicidal composition comprising as the active ingredients (a) at least one of tetrahydrophthalimides (hereinafter referred to as "Compound(s) (I)") of the formula:

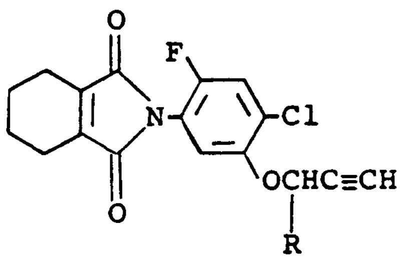

(I)

wherein R is a hydrogen atom or a methyl group and (b) at least one of 3-(4-isopropylphenyl)-1,1-dimethylurea of the formula:

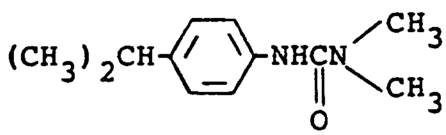

(II-1)

(hereinafter referred to as "isoproturon"), 3-(3-chloro-4-methoxyphenyl)-1,1-dimethylurea of the formula:

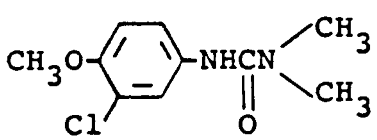

(II-2)

(hereinafter referred to as "metoxuron") and 3-(3-chloro-4-methylphenyl)-1,1-dimethylurea of the formula:

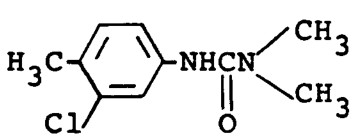

(II-3)

(hereinafter referred to as "chlortoluron"), which exerts a highly enhanced herbicidal activity against a wide variety of weeds without causing any material phytotoxicity to crop (plants (e.g. wheat, barley).

In recent years, there have been used a great number of chemicals having herbicidal activities in order to exterminate or control undesired vegetation of weeds in agricultural and non-agricultural fields. Since, however, weeds are diversified in kinds and grow over a long period of time, the herbicidal effects of conventional herbicidal agents are restricted in general. Under the circumstances, the appearance of any herbicidal agent exerting a strong herbicidal activity as well as a broad herbicidal spectrum over a wide variety of weeds has been highly demanded.

As a result of the extensive study, it has now been found that the associated use of (a) at least one of Compounds (I) with (b) at least one of isoproturon (II-1), metoxuron (II-2) and chlortoluron (II-3), these being hereinafter referred to as "Compound(s) (II)"), produces a highly enhanced herbicidal activity against a wide

variety of weeds in agricultural and non-agricultural fields. In comparison with the sole use of each of said active ingredients, enhancement of the herbicidal potency on such associated use is remarkable so that the active ingredients may be applied in a smaller dosages. Further, the weed-control spectrum is greatly enlarged. Thus, a clear and definite synergistic effect is observed in said associated use.

The herbicidal composition of the invention can exterminate or control a variety of weeds, i.e. monocotyledonous weeds such as blackgrass (Alopecurus myosuroides), wild oat (Avena fatua), annual bluegrass (Poa annua) and green foxtail (Setaria virids; dicotyledonous weeds such as catchweed bedstraw (Galium aparine), common chickweed (Stellaria media), persian speedwell (Veronica persica), field pansy (Viola arvensis), scentless chamomile (Matricaria perforata), pineappleweed (Matricaria matricarioides), purple deadnettle (Lamium purpureum), Canada thistle (Cirsium arvense), field pennycress (Thlaspi arvense), forget-me-not (Myosotis arvensis), ladysthumb (Polygonum persicaria), pale smartweed (Polygonum lapathifolium), wild buckwheat (Polygonum convolvulus), field bindweed (Convolvulus arvensis), common lambsquarters (Chenopodium album), redroot pigweed (Amaranthus retroflexus) and black nightshade (Solanum nigrum), etc. Particularly, it is notable that the herbicidal com position according to the invention can exterminate hardly controllable weeds such as catchweed bedstraw, common chickweed, persian speedwell, field pansy, ladysthumb, pale smartweed, wild buckwheat, wild mustard and blackgrass all together.

Compounds (I), which covers specifically the following two compounds:

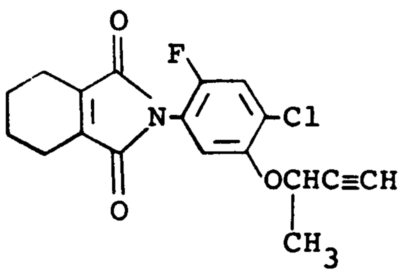

(Compound (1))

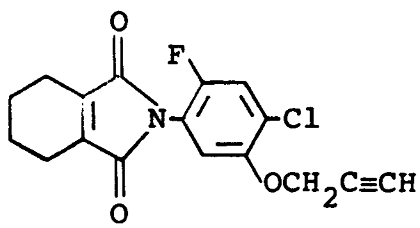

(Compound (2))

, are per se known to exert a herbicidal activity (EP-0061741A). Compounds (II), i.e. isoproturon, metoxuron and chlortoluron, are also known as herbicides (C.R. Worthing et al: The Pesticide Mannual, 7, 329, 379, 131 (1983) published by The British Crop Protection Council). However, their associated use has never been attempted, and the production of said synergistic effect on such associated use has never been expected.

The proportion of Compound(s) (I) as the component (a) and Compound(s) (II) as the component (b) in the composition of the invention may vary in a considerably broad range and is usually within a range of about 1 : 0.1 - 1000 by weight, preferably about 1 : 1 - 500 by weight

In addition to the above active ingredients, the composition may contain a solid or liquid carrier or diluent. Any surface active or auxiliary agent may also be contained therein. Thus, the compositon may be formulated in any conventional preparation from such as emulsifiable concentrate, wettable powder or suspension. The total content of the active ingredients, i.e. Compound(s) (I) and Compound(s) (II), may be from about 0.5 to 90 % by weight, preferably from about 2 to 80 % by weight.

As the solid carrier or diluent, there may be used kaolin clay, attapulgite clay, bentonite, terra alba, pyrophyllite, talc, diatomaceous earth, calcite, wallnut-shell powder, urea, ammonium sulfate, synthetic hydrated silica, etc. Examples of the liquid carrier or diluent are aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton-seed oil), dimethylsulfoxide, acetonitrile, water, etc.

The surface active agent used for emulsification, dispersion or spreading may be of any type such as anionic type or nonionic type. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition are illustratively shown in the following Formulation Examples wherein part(s) are by weight.

Formulation Example 1

0.5 Part of Compound No. (2), 50 parts of chlortoluron, 10 parts of synthetic hydrated silica, 3 parts of alkylsulfate, 2 parts of calcium ligninsulfonate and 34.5 parts of diatomaceous earth are well mixed and pulverized to obtain a wettable powder.

Formulation Example 2

0.1 Part of Compound (1), 20 parts of isoproturon, 3 parts of polyoxyethylene sorbitan monooleate and 76.9 parts of water are mixed and pulverized until the particle size becomes less than 5 microns to make a suspension.

Formulation Example 3

Twenty parts of Compound (1), 60 parts of isoproturon, 3 parts of calcium ligninsulfonate, 2 parts of sodium laurylsulfate and 15 parts of synthetic hydrated silica are well mixed and pulverized to obtain a wettable powder.

Formulation Example 4

Five parts of Compound (1), 50 parts of metoxuron, 5 parts of polyoxyethylene sorbitan monooleate, 5 parts of polyvinyl alcohol and 35 parts of water are mixed and pulverized until the particle size becomes less than 5 microns to make a suspension.

Formulation Example 5

One part of Compound (2), 9 parts of isoproturon, 30 parts of bentonite, 1 part of calcium ligninsulfonate and 59 parts of talc are well mixed and pulverized. The resulting powder is admixed with water and dried to obtain granules.

Formulation Example 6

0.5 Part of Compound (1), 2 parts of isoproturon, 80 parts of cyclohexanone and 17.5 parts of a surfactant ("Toxanone P-8L" manufactured by Sanyo Kasei Co.) are well mixed and pulverized to obtain a wettable powder.

A composition comprising Compound(s) (I) and Compound(s) (II) thus formulated is useful for pre-emergence control of undesired weeds by soil treatment or post-emergence control of undesired weeds by foliar treatment. The soil treatments include the application to the soil surface prior to or after the seeding or transplanting of the crop or the incorporation into the soil before seeding. The foliar treatment may be effected by spraying the composition containing Compound(s) (I) and Compound(s) (II) over the top of plants. The direct application may also be adopted.

In order to improve the herbicidal activity, the composition may be used with other herbicides. Besides, it may be used in combination with insecticides, acaricides, nematocides, fungicides, plant growth regulators, fertilizers, soil improvers, etc.

The composition of the invention is widely used as the herbicide applicable in plowed field, non-cropping land, orchards, pasture land, lawn, forest, non-agricultural fields, etc.

The dosage of the active ingredients may vary depending on prevailing weather conditions, soil involved, formulation used, mixing proportion of each active ingredient, crop and weed species, etc. In general, however, the total amount of Compound(s) (I) and Compound(s) (II) may be within a range of about 10 to 10,000 grams per hectare. In case of the composition being in the form of emulsifiable concentrate, wettable powder, suspension or the like, it is normally diluted with water and then applied at a volume of about 100 to 1,000 liters per hectare to the area where extermination of weeds is desired. The dilution may include any surface active agent and/or any auxiliary agent as stated above. The composition in the form of granules, etc. is normally used as such.

The herbicidal activity of the composition of the invention will be explained in further detail with reference to the following Test Examples wherein the growth control percentage (%) was determined by weighing the aerial parts of the test plants (fresh weight) and making calculation according to the following equation:

$$\text{Growth control percentage (\%)} = \left\{ 1 - \frac{\text{Fresh weight of test plant in treated plot}}{\text{Fresh weight of test plant in untreated plot}} \right\} \times 100$$

The phytotoxicity to crop plants was visually observed.

Test Example 1

Seeds of wheat, barley, catchweed bedstraw, common chickweed, field pansy, persian speedwell, ladysthumb, wild mustard, annual bluegrass and blackgrass were sowed in a vat area, 33 × 22 $cm^2$; height, 11 cm) filled with upland field soil, followed by cultivation outdoors. A designated amount of the composition in the form of a suspension formulated according to Formulation Example 2 was diluted with water and sprayed to the foliage of the test plants at a spray volume of 500 liters per hectare by the aid of a small hand sprayer. After 35 days' cultivation outdoors, the phytotoxicity and the growth control percentage were observed. The results are shown in Table 1. At the time of treatment, the test plants were in general at the

1 to 4-leaf stage and had a height of 2 to 25 cm, although the growing stage varied depending on each species.

Table 1

| Compound No. | Dosage (g/ha) | Mixing ratio (by weight) | Phytotoxicity | | Growth controlling percentage (%) | | | | | | | |
|---|---|---|---|---|---|---|---|---|---|---|---|---|
| | | | Wheat | Barley | Catchweed bedstraw | Common chickweed | Field pansy | Ladysthumb | Persian speedwell | Wild mustard | Annual bluegrass | Blackgrass |
| (1) | 8 | - | None | None | 100 | 82 | 100 | 100 | 100 | 100 | 15 | 16 |
| | 16 | - | None | None | 100 | 96 | 100 | 100 | 100 | 100 | 27 | 33 |
| Isoproturon | 700 | - | None | None | 32 | 59 | 40 | 38 | 0 | 46 | 34 | 55 |
| | 1400 | - | None | None | 37 | 100 | 100 | 96 | 0 | 52 | 47 | 80 |
| (1) + Isoproturon | 8 + 700 | 87.5 | None | None | 100 | 100 | 100 | 100 | 100 | 100 | 91 | 72 |
| | 16 + 700 | 43.8 | None | None | 100 | 100 | 100 | 100 | 100 | 100 | 95 | 78 |
| | 8 + 1400 | 175 | None | None | 100 | 100 | 100 | 100 | 100 | 100 | 93 | 95 |
| | 16 + 1400 | 87.5 | None | None | 100 | 100 | 100 | 100 | 100 | 100 | 100 | 100 |

Test Example 2

Seeds of blackgrass were sowed in a vat (area, 33 × 23 $cm^2$; height, 11 cm) filled with upland field soil and cultivated outdoors for 20 days. A designated amount of the composition in the form of a suspension formulated according to Formuration Example 2 was diluted with water and sprayed to the foliage of the test plant at a spray volume of 500 liters per hectare by the aid of a small hand sprayer. After 35 days' cultivation outdoors, the growth control percentage was observed. The results are shown in Table 2. At the time of treatment, the test plant was at the 2 to 3-leaf stage and had a height of 15 to 20 cm.

Table 2

| Compound No. | Dosage (g/ha) | Mixing ratio (by weight) | Growth control percentage of blackgrass (%) |
|---|---|---|---|
| (1) | 4 | - | 7 |
| | 8 | - | 16 |
| | 16 | - | 33 |
| | 32 | - | 51 |
| | 64 | - | 70 |
| | 128 | - | 84 |
| | 256 | - | 92 |
| Isoproturon | 350 | - | 35 |
| | 700 | - | 55 |
| | 1400 | - | 80 |
| | 2800 | - | 92 |
| (1) + Isoproturon | 4 + 350 | 1 : 87.5 | 40 |
| | 4 + 700 | 1 : 175 | 64 |
| | 4 + 1400 | 1 : 350 | 83 |
| | 8 + 350 | 1 : 43.8 | 50 |
| | 8 + 700 | 1 : 87.5 | 72 |
| | 8 + 1400 | 1 : 175 | 95 |
| | 16 + 350 | 1 : 21.9 | 61 |
| | 16 + 700 | 1 : 43.8 | 78 |
| | 16 + 1400 | 1 : 87.5 | 100 |
| | 32 + 350 | 1 : 10.9 | 76 |
| | 32 + 700 | 1 : 21.9 | 89 |
| | 32 + 1400 | 1 : 43.8 | 100 |
| | 64 + 350 | 1 : 5.47 | 86 |
| | 64 + 700 | 1 : 10.9 | 100 |
| | 64 + 1400 | 1 : 21.9 | 100 |

Test Example 3

Seeds of wheat, barley, catchweed bedstraw, common chickweed, field pansy, persian speedwell, ladysthumb, field bindweed, blackgrass and wild oat were sowed in a vat (area, 33 x 23 $cm^2$; height, 11 cm) filled with upland field soil, followed by cultivation outdoors. A designated amount of the composition in the form of a suspension formulated according to Formulation Example 2 was diluted with water and sprayed to the foliage of the test plants at a spray volume of 500 liters per hectare by the aid of a small hand sprayer. After 35 days' cultivation outdoors, the phytotoxicity and growth control percentage were observed. The

results are shown in Table 3. At the time of treatment, the test plants were in general at the 1 to 4-leaf stage and had a height of 2 to 25 cm, although the growing stage varied depending on each species.

Table 3

| Compound No. | Dosage (g/ha) | Mixing ratio (by weight) | Phytotoxicity | | Growth controlling percentage (%) | | | | | | | |
|---|---|---|---|---|---|---|---|---|---|---|---|---|
| | | | Wheat | Barley | Catchweed bedstraw | Common chickweed | Field pansy | Ladysthumb | Persian speedwell | Field bindweed | Wild oat | Blackgrass |
| (2) | 8 | - | None | None | 38 | 85 | 100 | 100 | 100 | 100 | 24 | 14 |
| | 16 | - | None | None | 62 | 98 | 100 | 100 | 100 | 100 | 32 | 31 |
| Metoxuron | 2000 | - | None | None | 53 | 100 | 65 | 42 | 5 | 33 | 45 | 75 |
| | 4000 | | None | None | 72 | 100 | 100 | 93 | 26 | 83 | 75 | 94 |
| (2) + Metoxuron | 8 + 2000 | 1 : 250 | None | None | 77 | 100 | 100 | 100 | 100 | 100 | 85 | 84 |
| | 16 + 2000 | 1 : 125 | None | None | 84 | 100 | 100 | 100 | 100 | 100 | 91 | 100 |
| | 8 + 4000 | 1 : 500 | None | None | 85 | 100 | 100 | 100 | 100 | 100 | 96 | 96 |
| | 16 + 4000 | 1 : 250 | None | None | 95 | 100 | 100 | 100 | 100 | 100 | 100 | 100 |

Test Example 4

Seeds of catchweed bedstraw were sowed in a vat area, 33 × 23 $cm^2$; height, 11 cm) filled with upland field soil and cultivated outdoors for 30 days. A designated amount of the composition in the form of a suspension formulated according to Formuration Example 2 was diluted with water and sprayed to the foliage of the test plant at a pray volume of 500 liters per hectare by the aid of a small hand sprayer. After 35 days' cultivation outdoors, the growth control percentage was observed. The results are shown in Table 4. At the time of treatment, the test plant was at the 2-leaf stage and had a height of 5 to 9 cm.

Table 4

| Compound No. | Dosage (g/ha) | Mixing ratio (by weight) | Growth control percentage of catchweed bedstraw (%) |
|---|---|---|---|
| (2) | 4 | - | 19 |
| | 8 | - | 38 |
| | 16 | - | 62 |
| | 32 | - | 83 |
| | 64 | - | 95 |
| Metoxuron | 500 | - | 15 |
| | 1000 | - | 32 |
| | 2000 | - | 53 |
| | 4000 | - | 72 |
| | 8000 | - | 87 |
| (2) + Metoxuron | 4 + 500 | 1 : 125 | 31 |
| | 4 + 1000 | 1 : 250 | 58 |
| | 4 + 2000 | 1 : 500 | 72 |
| | 4 + 4000 | 1 : 1000 | 83 |
| | 8 + 500 | 1 : 62.5 | 53 |
| | 8 + 1000 | 1 : 125 | 70 |
| | 8 + 2000 | 1 : 250 | 77 |
| | 8 + 4000 | 1 : 500 | 85 |
| | 16 + 500 | 1 : 31.3 | 74 |
| | 16 + 1000 | 1 : 62.5 | 80 |
| | 16 + 2000 | 1 : 125 | 84 |
| | 16 + 4000 | 1 : 250 | 95 |
| | 32 + 500 | 1 : 15.6 | 86 |
| | 32 + 1000 | 1 : 31.3 | 88 |
| | 32 + 2000 | 1 : 62.5 | 94 |
| | 32 + 4000 | 1 : 125 | 100 |

Test Example 5

Seeds of wheat, catchweed bedstraw, common chickweed, field pansy, wild mustard, pineappleweed and blackgrass were sowed in a vat (area, 33 x 23 $cm^2$; height, 11 cm) filled with upland field soil, and a designated amount of the composition in the form of a wettable powder formulated according to Formulation Example 1 was diluted with water and sprayed to the soil at a spray volume of 500 liters per hectare by the

aid of a small hand sprayer. After 35 days' cultivation outdoors, the phytotoxicity and growth control percentage were observed. The results are shown in Table 5.

Table 5

| Compound No. | Dosage (g/ha) | Mixing ratio (by weight) | Phytotoxicity | Growth controlling percentage (%) | | | | | |
|---|---|---|---|---|---|---|---|---|---|
| | | | Wheat | Catchweed bedstraw | Common chickweed | Field pansy | Wild mustard | Pineappleweed | Blackgrass |
| (1) | 30 | - | None | 83 | 73 | 85 | 98 | 87 | 25 |
| | 60 | - | None | 93 | 88 | 96 | 100 | 93 | 43 |
| Chlortoluron | 1500 | - | None | 15 | 63 | 15 | 62 | 87 | 80 |
| | 3000 | - | None | 33 | 85 | 44 | 95 | 100 | 93 |
| (1) + Chlortoluron | 30 + 1500 | 1 : 50 | None | 92 | 100 | 96 | 100 | 100 | 91 |
| | 30 + 3000 | 1 : 100 | None | 100 | 100 | 100 | 100 | 100 | 97 |
| | 60 + 1500 | 1 : 25 | None | 100 | 100 | 100 | 100 | 100 | 98 |
| | 60 + 3000 | 1 : 50 | None | 100 | 100 | 100 | 100 | 100 | 100 |

Test Example 6

Seeds of common chickweed were sowed in a vat (area, 33 × 23 $cm^2$; height, 11 cm) filled with upland field soil, and a designated amount of the composition in the form of a wettable powder formulated according to Formuration Example 1 was diluted with water and sprayed to the soil at a spray volume of 500 liters per hectare by the aid of a small hand sprayer. After 35 days' cultivation outdoors, the growth control percentage was observed. The results are shown in Table 6.

Table 6

| Compound No. | Dosage (g/ha) | Mixing ratio (by weight) | Growth control percentage of common chickweed (%) |
|---|---|---|---|
| (1) | 7.5 | - | 25 |
| | 15 | - | 48 |
| | 30 | - | 72 |
| | 60 | - | 86 |
| | 120 | - | 95 |
| Chlortoluron | 400 | - | 22 |
| | 800 | - | 46 |
| | 1600 | - | 70 |
| | 3200 | - | 88 |
| | 6400 | - | 99 |
| (1) + Chlortoluron | 7.5 + 400 | 1 : 53.3 | 41 |
| | 7.5 + 800 | 1 : 106.7 | 73 |
| | 7.5 + 1600 | 1 : 213.3 | 83 |
| | 7.5 + 3200 | 1 : 426.7 | 95 |
| | 7.5 + 6400 | 1 : 853.3 | 100 |
| | 15 + 400 | 1 : 26.7 | 65 |
| | 15 + 800 | 1 : 53.3 | 83 |
| | 15 + 1600 | 1 : 106.7 | 92 |
| | 15 + 3200 | 1 : 213.3 | 99 |
| | 30 + 400 | 1 : 13.3 | 86 |
| | 30 + 800 | 1 : 26.7 | 94 |
| | 30 + 3200 | 1 : 53.3 | 97 |
| | 30 + 6400 | 1 : 106.7 | 100 |
| | 60 + 400 | 1 : 6.7 | 94 |
| | 60 + 800 | 1 : 13.3 | 98 |
| | 60 + 1600 | 1 : 26.7 | 100 |
| | 60 + 3200 | 1 : 53.3 | 100 |

Test Example 7

Seeds of wild oat were sowed in a vat (area, 33 x 23 $cm^2$; height, 11 cm) filled with upland field soil and cultivated outdoors for 30 days. A designated amount of the composition in the form of a suspension formulated according to Formulation Example 2 was diluted with water and sprayed to the foliage of the test plants at a spray volume of 500 liters per hectare by the aid of a small hand sprayer. After 35 days' cultivation outdoors, the growth control percentage was observed. The results are shown in Table 7. At the time of treatment, the test plant was at the 2-leaf stage and had a height of 5 to 9 cm.

Table 7

| Compound No. | Dosage (g/ha) | Mixing ratio (by weight) | Growth control percentage of wild oat (%) |
|---|---|---|---|
| (1) | 12.5 | - | 25 |
| | 25 | - | 51 |
| | 50 | - | 75 |
| | 100 | - | 91 |
| | 200 | - | 100 |
| Isoproturon | 200 | - | 33 |
| | 400 | - | 52 |
| | 800 | - | 77 |
| | 1600 | - | 92 |
| | 3200 | - | 98 |
| (1) + Isoproturon | 12.5 + 200 | 1 : 16 | 57 |
| | 12.5 + 400 | 1 : 32 | 74 |
| | 12.5 + 800 | 1 : 64 | 90 |
| | 12.5 + 1600 | 1 : 128 | 97 |
| | 12.5 + 3200 | 1 : 256 | 100 |
| | 25 + 200 | 1 : 8 | 72 |
| | 25 + 400 | 1 : 16 | 86 |
| | 25 + 800 | 1 : 32 | 96 |
| | 25 + 1600 | 1 : 64 | 100 |
| | 25 + 3200 | 1 : 128 | 100 |
| | 50 + 200 | 1 : 4 | 87 |
| | 50 + 400 | 1 : 8 | 98 |
| | 50 + 800 | 1 : 16 | 100 |
| | 50 + 1600 | 1 : 32 | 100 |
| | 100 + 200 | 1 : 2 | 97 |
| | 100 + 400 | 1 : 4 | 100 |
| | 100 + 800 | 1 : 8 | 100 |
| | 100 + 1600 | 1 : 16 | 100 |
| | 200 + 200 | 1 : 1 | 100 |
| | 200 + 400 | 1 : 2 | 100 |

The results in Test Examples 2, 4, 6 and 7 were analyzed according to the isobor (i.e. equivalent efficacy line) method [Vol. 3, Herbicides, pages 109 - 111 (1981) in "Noyaku Jikkenho" (Methods in Pesticide Science) edited by Junichi Fukami et al., Soft Science Inc., Tokyo) based on the Tammes's method [Tammes, P.M.L.: Neth. J. Plant Path., 70, 73-80 (1964)]. Namely, several combinations of the compositions having different mixing ratios of Compound (I) and isoproturon, metoxuron or chlortoluron but exerting the same level of growth control effect, for example, 80 % growth control, were plotted in a graph so as to readily determine a synergistic effect, an arithmetic effect or a competitive effect. In case of exhibiting the synergistic effect, the equivalent efficacy line as plotted is shown below the arithmetic efficacy line.

Explaining further in detail with reference to the accompanying drawings, Fig. 1 wherein the ordinate indicates the dosage of isoproturon and the abscissa indicates the dosage of Compound (1), the equivalent efficacy line (i.e. solid line) of 80 % growth control of blackgrass is located under the arithmetic efficacy line (i.e. dotted line), from which it is understood that the associated use of Compound (1) and isoproturon in a certain mixing ratio produces the synergistic effect; Fig. 2 wherein the ordinate indicates the dosage of metoxuron and the abscissa indicates the dosage of Compound (2), the equivalent efficacy line (i.e. solid line) of 80 % growth control of catchweed bedstraw is located under the arithmetic efficacy line (i.e. dotted line), from which it is understood that the associated use of Compound (2) and metoxuron in a certain mixing ratio produces the synergistic effect; Fig. 3 wherein the ordinate indicates the dosage of chlortoluron and the abscissa indicates the dosage of Compound (1), the equivalent efficacy line (i.e. solid line) of 80 % growth control of common chickweed is located under the arithmetic efficacy line (i.e. dotted line), from which it is understood that the associated use of Compound (1) and chlortoluron in a certain mixing ratio

produces the synergistic effect; likewise, Fig. 4 of the accompanying drawing wherein the ordinate indicates the dosage of isoproturon and the abscissa indicates the dosage of Compound (1), the equivalent efficacy line (i.e. solid line) of 90 % growth control of wild oat is located under the arithmetic efficacy line (i.e. dotted line), from which it is understood that the associated use of Compound (1) and isoproturon in a certain mixing ratio produces the synergistic effect.

**Claims**

1. A herbicidal composition which comprises a combination of (a) at least one of compounds of the formula:

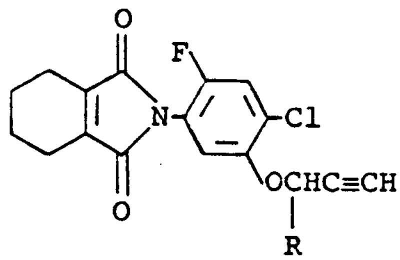

wherein R is a hydrogen atom or a methyl group and (b) at least one of 3-(4-isopropylphenyl)-1,1-dimethylurea, 3-(3-chloro-4-methoxyphenyl)-1,1-dimethylurea and 3-(3-chloro-4-methylphenyl)-1,1-dimethylurea as the active ingredient in a quantity producing a synergistic herbicidal effect, and an inert carrier or diluent.

2. The composition according to claim 1, wherein the weight proportion of the components (a) and (b) is from 1 : 0.1 to 1000.

3. The composition according to claim 1, wherein the weight proportion of the components (a) and (b) is from 1 : 1 to 500.

4. A method for controlling weeds which comprises applying a quantity producing a synergistic herbicidal effect of the composition according to claim 1 to the weeds.

5. The method according to claim 4, wherein the weeds are those germinated in a field of wheat or barley.

6. The method according to claim 4, wherein the total amount of the components (a) and (b) is from 10 to 10000 grams per hectare.

7. A process for preparing a herbicidal composition which comprises mixing (a) at least one of compounds of the formula:

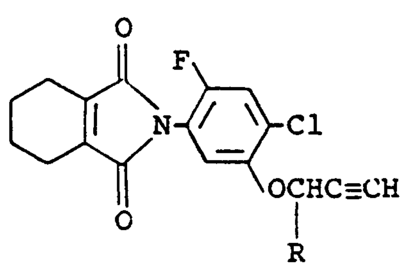

wherein R is a hydrogen atom or a methyl group and (b) at least one of 3-(4-isopropylphenyl)-1,1-dimethylurea, 3-(3-choro-4-methoxyphenyl)-1,1-dimethylurea and 3-(3-chloro-4-methylphenyl)-1,1-dimethylurea in a quantity producing a synergistic herbicidal effect with an inert carrier or diluent.

8. The process according to claim 7, wherein the weight proportion of the components (a) and (b) is from 1 : 0.1 to 1,000.

9. The process according to claim 7, wherein the weight proportion of the components (a) and (b) is from 1 : 1 to 500.

10. The process according to claim 7, wherein the total content of the components (a) and (b) is from about 0.5 to 90 % by weight.

## Revendications

1. Composition herbicide, qui comprend une combinaison de (a) au moins un composé de la formule

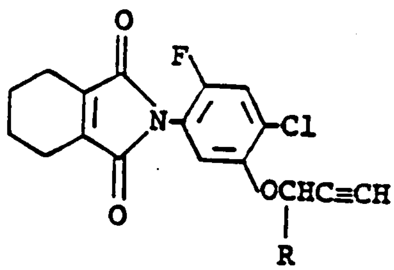

dans laquelle R représente un atome d'hydrogène ou le radical méthyle et (b) au moins une des substances choisies parmi la 3-(4-isopropylphényl)-1,1-diméthylurée, la 3-(3-chloro-4-méthoxyphényl)-1,1-diméthylurée et la 3-(3-chloro-4-méthylphényl)-1,1-diméthylurée, à titre d'ingrédient actif, en une proportion qui produit un effet herbicide synergique et un diluant ou véhicule inerte.

2. Composition suivant la revendication 1, caractérisée en ce que la proportion pondérale des composants (a) et (b) varie de 1:0,1 à 1000.

3. Composition suivant la revendication 1, caractérisée en ce que la proportion pondérale des composants (a) et (b) varie de 1:1 à 500.

4. Procédé pour lutter contre des mauvaises herbes, caractérisé en ce que l'on applique une proportion qui produit un effet herbicide synergique de la composition suivant la revendication 1 sur les mauvaises herbes.

5. Procédé suivant la revendication 4, caractérisé en ce que les mauvaises herbes sont celles qui ont germé dans un champ de blé ou d'orge.

6. Procédé suivant la revendication 4, caractérisé en ce que la quantité totale des composants (a) et (b) varie de 10 à 10000 grammes par hectare.

7. Procédé de préparation d'une composition herbicide, caractérisé en ce que l'on mélange (a) au moins un composé de la formule

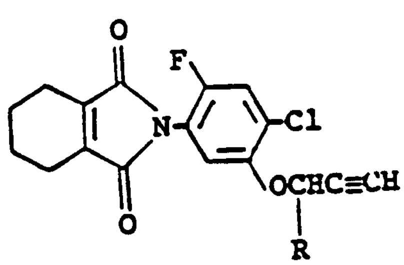

dans laquelle R représente un atome d'hydrogène ou le radical méthyle et (b) au moins une des

substances choisies parmi la 3-(4-isopropylphényl)-1,1-diméthylurée, la 3-(3-chloro-4-méthoxyphényl)-1,1-diméthylurée et la 3-(3-chloro-4-méthylphényl)-1,1-diméthylurée, à titre d'ingrédient actif, en une proportion qui produit un effet herbicide synergique et un diluant ou véhicule inerte.

**8.** Procédé suivant la revendication 7, caractérisé en ce que la proportion pondérale des composants (a) et (b) varie de 1:0,1 à 1000.

**9.** Procédé suivant la revendication 7, caractérisé en ce que la proportion pondérale des composants (a) et (b) varie de 1:1 à 500.

**10.** Procédé suivant la revendication 7, caractérisé en ce que la teneur totale en composants (a) et (b) fluctue d'environ 0,5 à 90% en poids.

**Patentansprüche**

**1.** Herbizides Mittel, das eine Kombination von (a) mindestens einer Verbindung der Formel:

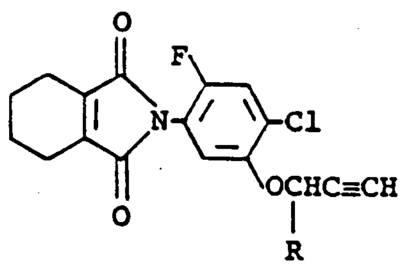

in der R ein Wasserstoffatom oder eine Methylgruppe ist, und (b) mindestens einer der Verbindungen 3-(4-Isopropylphenyl)-1,1-dimethylharnstoff, 3-(3-Chlor-4-methoxyphenyl)-1,1-dimethylharnstoff und 3-(3-Chlor-4-methylphenyl)-1,1-dimethylharnstoff als aktiven Bestandteil in einer Menge, die einen synergistischen herbiziden Effekt bewirkt, und einen inerten Träger oder ein inertes Verdünnungsmittel umfaßt.

**2.** Mittel nach Anspruch 1, wobei das Gewichtsverhältnis der Komponenten (a) und (b) im Bereich von 1 : 0,1 bis 1000 liegt.

**3.** Mittel nach Anspruch 1, wobei das Gewichtsverhältnis der Komponenten (a) und (b) im Bereich von 1 : 1 bis 500 liegt.

**4.** Verfahren zur Unkrautbekämpfung, das das Aufbringen des Mittels nach Anspruch 1 auf das Unkraut in einer Menge umfaßt, die einen synergistischen herbiziden Effekt bewirkt.

**5.** Verfahren nach Anspruch 4, wobei das Unkraut auf einem Weizen- oder Gerstenfeld wächst.

**6.** Verfahren nach Anspruch 4, wobei die Gesamtmenge der Komponenten (a) und (b) im Bereich von 10 bis 10 000 g/ha liegt.

7. Verfahren zur Herstellung eines herbiziden Mittels, das das Mischen von (a) mindestens einer Verbindung der Formel:

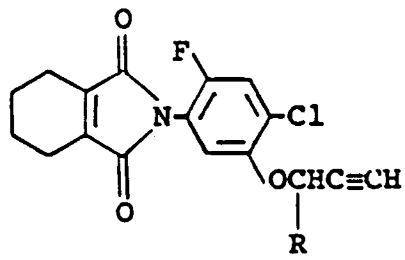

in der R ein Wasserstoffatom oder eine Methylgruppe und (b) mindestens einer der Verbindungen 3-(4-Isopropylphenyl)-1,1-dimethylharnstoff, 3-(3-Chlor-4-methoxyphenyl)-1,1-dimethylharnstoff und 3-(3-Chlor-4-methylphenyl)-1,1-dimethylharnstoff in einer Menge, die einen synergistischen herbiziden Effekt bewirkt, mit einem inerten Träger oder inerten Verdünnungsmittel umfaßt.

8. Verfahren nach Anspruch 7, wobei das Gewichtsverhältnis der Komponenten (a) und (b) im Bereich von 1 : 0,1 bis 1000 liegt.

9. Verfahren nach Anspruch 7, wobei das Gewichtsverhältnis der Komponenten (a) und (b) im Bereich von 1 : 1 bis 500 liegt.

10. Verfahren nach Anspruch 7, wobei der Gesamtgehalt der Komponenten (a) und (b) im Bereich von 0,5 bis 90 Gew.-% liegt.

Fig. 1

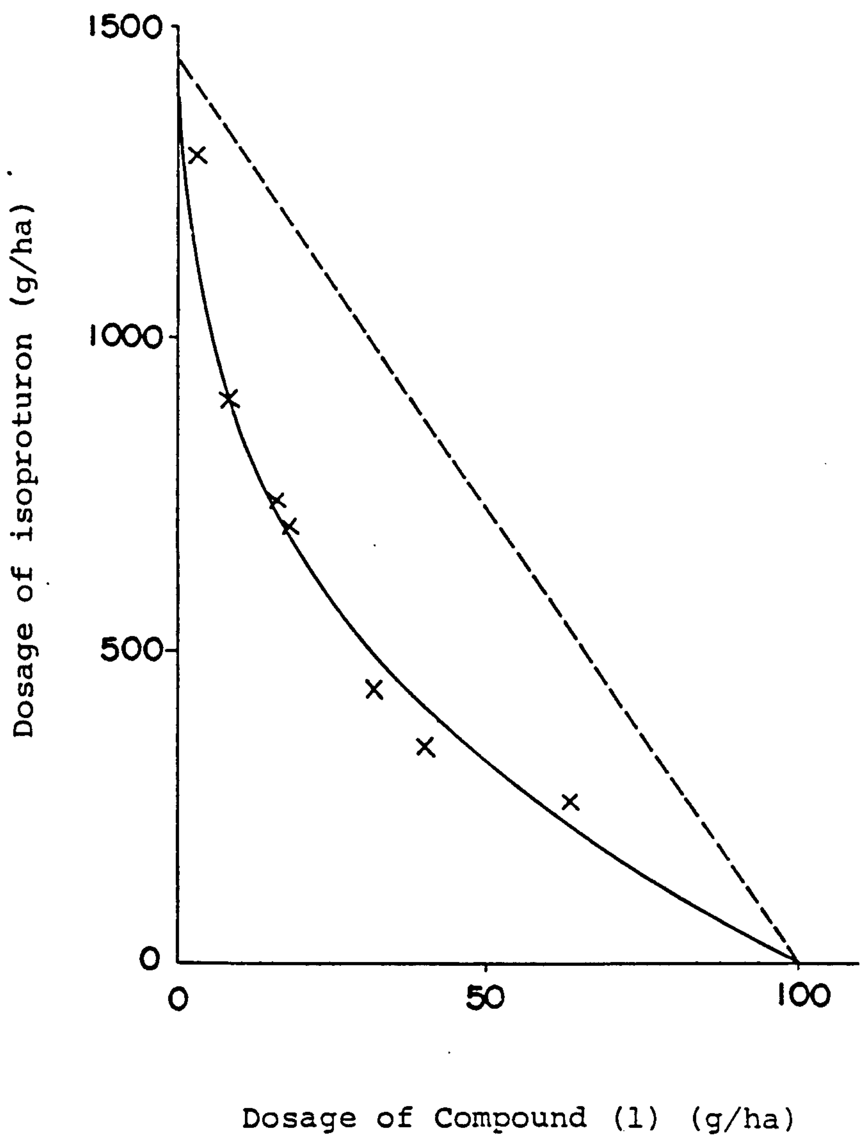
1500
1000
500
0
0
50
100
Dosage of isoproturon (g/ha)
Dosage of Compound (1) (g/ha)

*Fig.2*

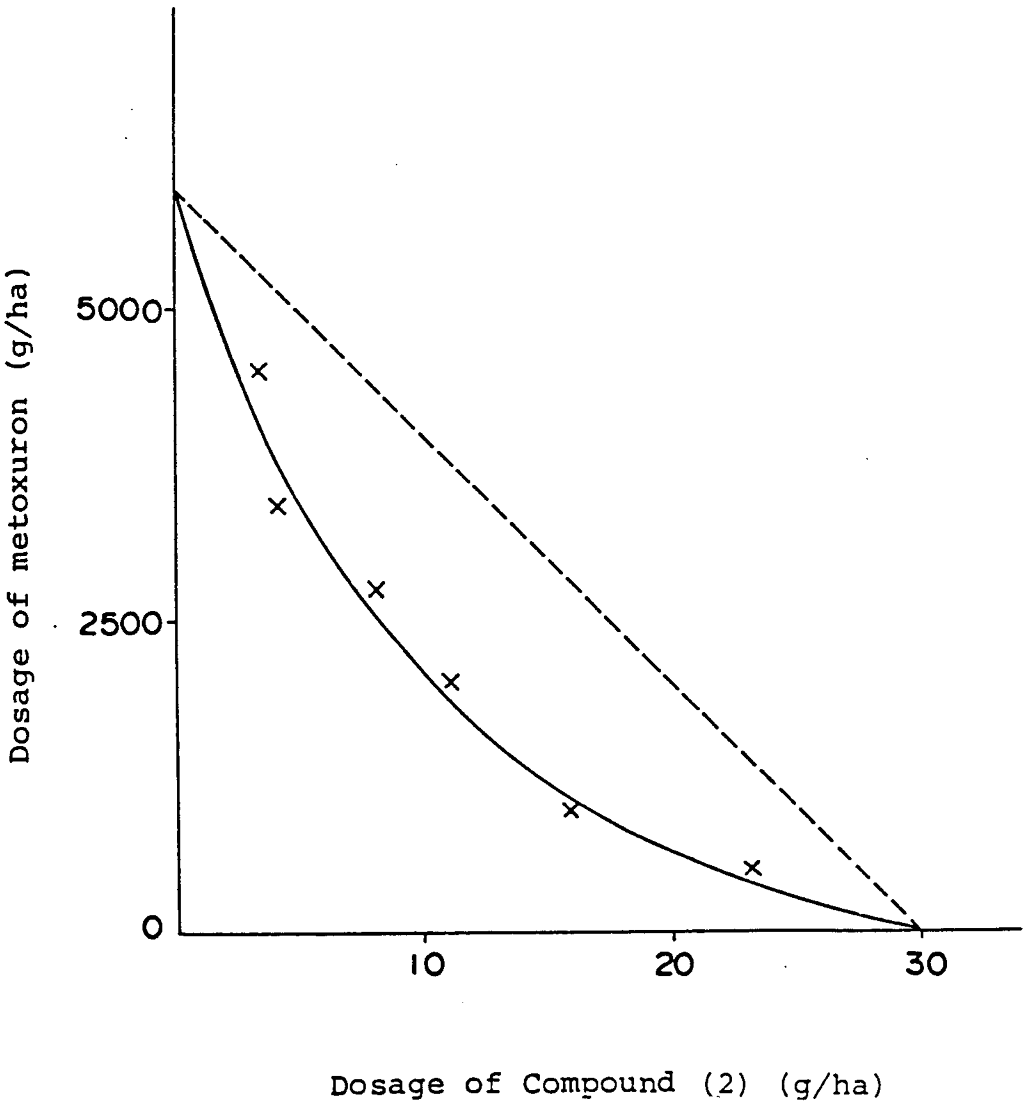
Dosage of metoxuron (g/ha)
5000
2500
0
10
20
30
Dosage of Compound (2) (g/ha)

*Fig. 3*

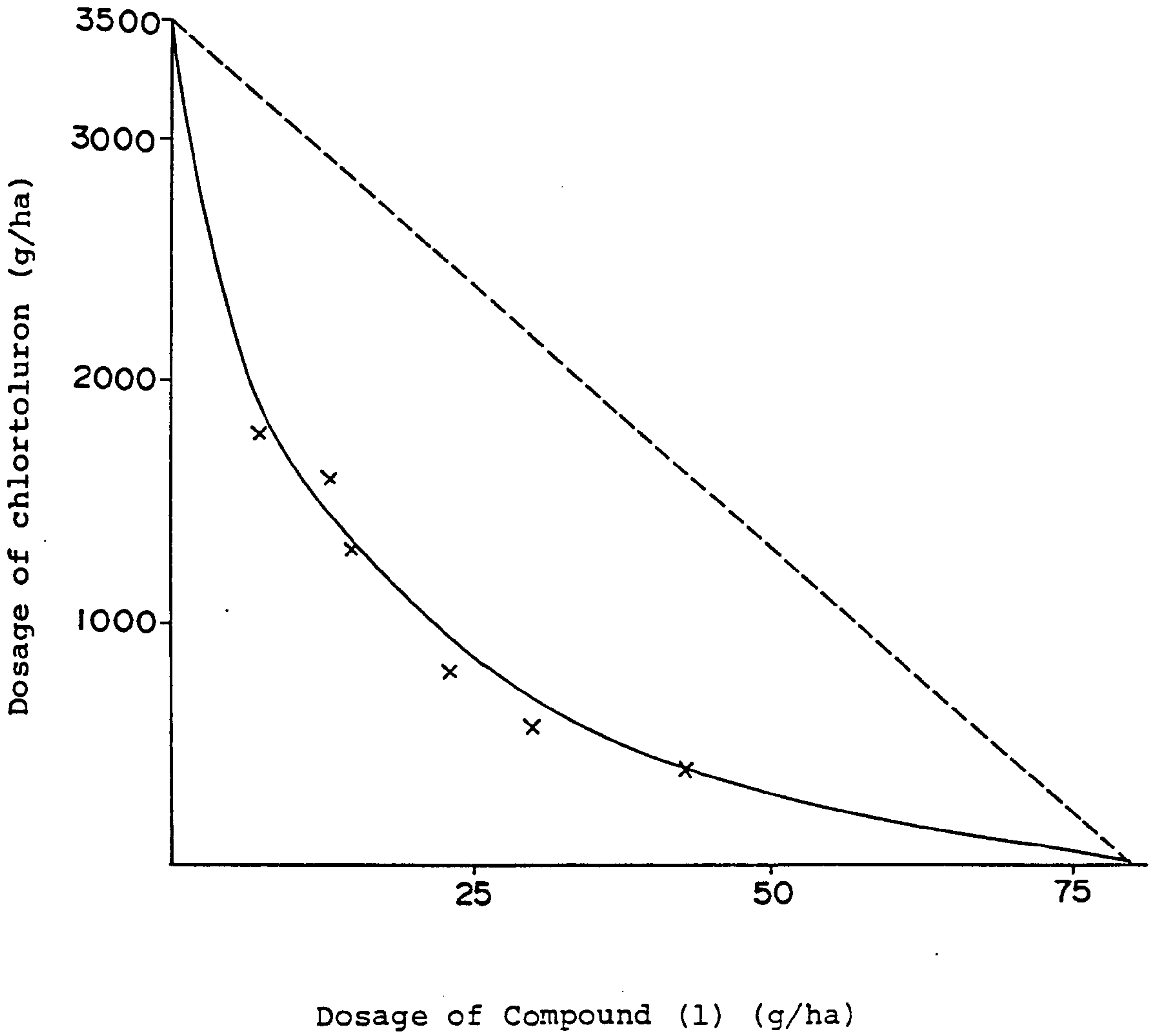
3500
3000
2000
1000
Dosage of chlortoluron (g/ha)
25
50
75
Dosage of Compound (1) (g/ha)

*Fig. 4*

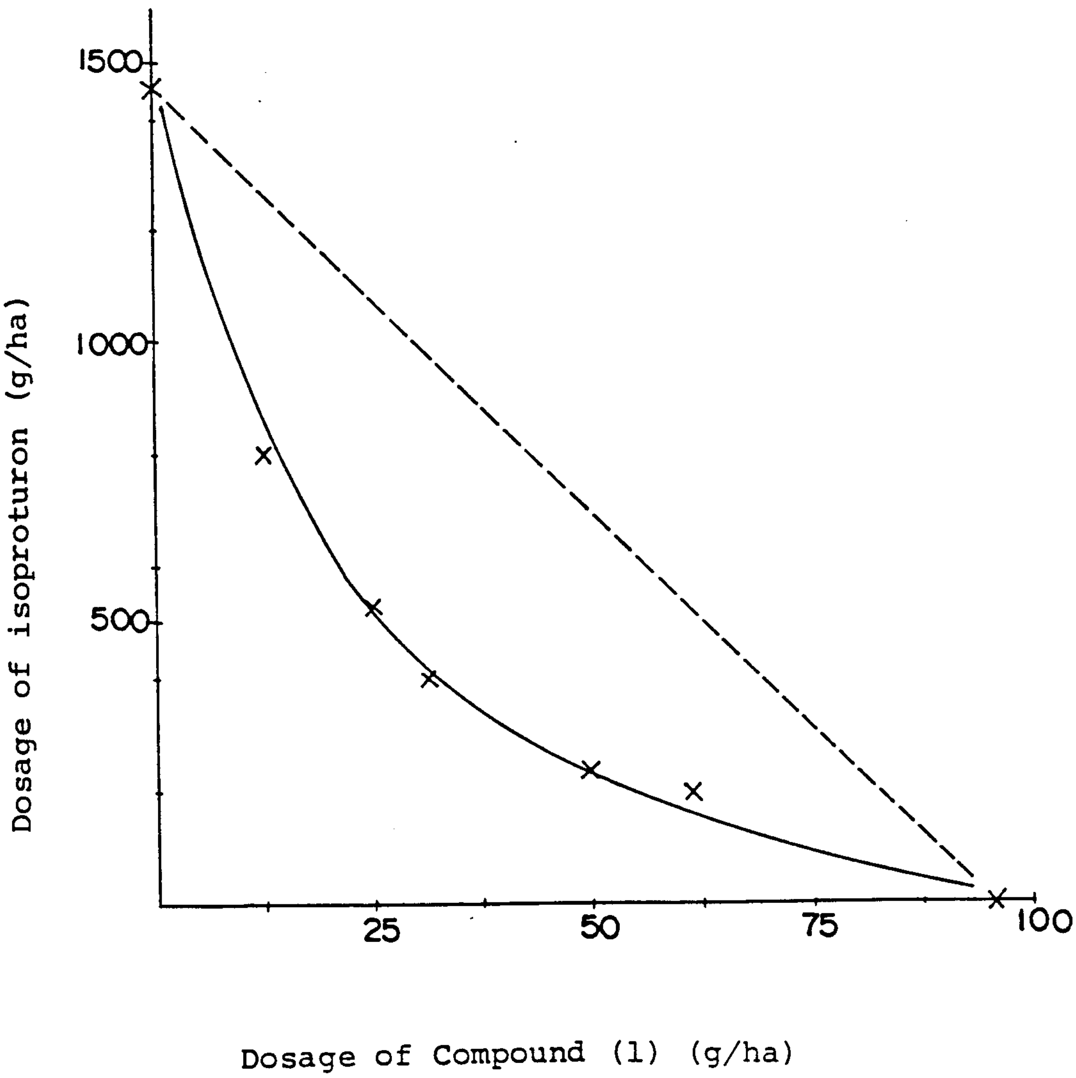
1500
1000
500
Dosage of isoproturon (g/ha)
25
50
75
100
Dosage of Compound (1) (g/ha)